(19) Europäisches Patentamt

European Patent Office

Office européen des brevets

(11) **EP 1 553 787 A2**

(12) **EUROPEAN PATENT APPLICATION**

(43) Date of publication:
**13.07.2005 Bulletin 2005/28**

(51) Int Cl.⁷: $H04N\ 9/64$

(21) Application number: **05250102.0**

(22) Date of filing: **11.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **12.01.2004 KR 2004001897**

(71) Applicant: **LG ELECTRONICS INC.**
**Seoul (KR)**

(72) Inventor: **Kim, Hee Chul**
**Hwangsang-dong, Gumi-si,Gyeongsangbuk-do (KR)**

(74) Representative: **Neobard, William John et al**
**Kilburn & Strode**
**20 Red Lion Street**
**London WC1R 4PJ (GB)**

Remarks:
The application is published incomplete as filed (Article 93 (2) EPC).

(54) **Color reproduction apparatus and method for display device**

(57) A color reproduction apparatus includes a camera inverse gamma correction unit for performing a camera inverse gamma correction of an input video signal using an inverse gamma correction table, a matrix correction unit for performing a matrix correction of the video signal, a display gamma correction unit for performing a display gamma correction of the matrix-corrected video signal using a gamma correction table, and a Munsell hue correction unit for correcting a difference between colors sent from the signal source and colors reproduced through the display device according to a color reproduction gamut difference between the signal source and the display device with respect to the display-gamma-corrected video signal.

## FIG. 3

EP 1 553 787 A2

**Description**

The present invention relates generally to a display device, and more particularly to a color reproduction apparatus and method for a display device. Embodiments can reproduce the same colors as those sent from a signal source even if a color reproduction gamut of the display device is different from that of the signal source.

Generally, an image pickup device or a display device can pick up or reproduce colors of a limited range in comparison to natural colors that a human can sense. Such a range of colors that can be picked up or reproduced is called a color reproduction gamut of the display device.

If the color reproduction gamut of the display device is the same as that of the image pickup device, the display device can reproduce the same colors as those picked up by the image pickup device. If the color reproduction gamut of the display device is different from that of the image pickup device, however, the display device cannot reproduce the same colors as those picked up by the image pickup device.

Specifically, if the color reproduction gamut of the signal source is different from that of the display device, the display device selects and reproduces the colors corresponding to the colors from the signal source from its own color reproduction gamut. As the colors are reproduced in this manner, the reproduced colors appear differently from those of the signal source in the Munsell color system.

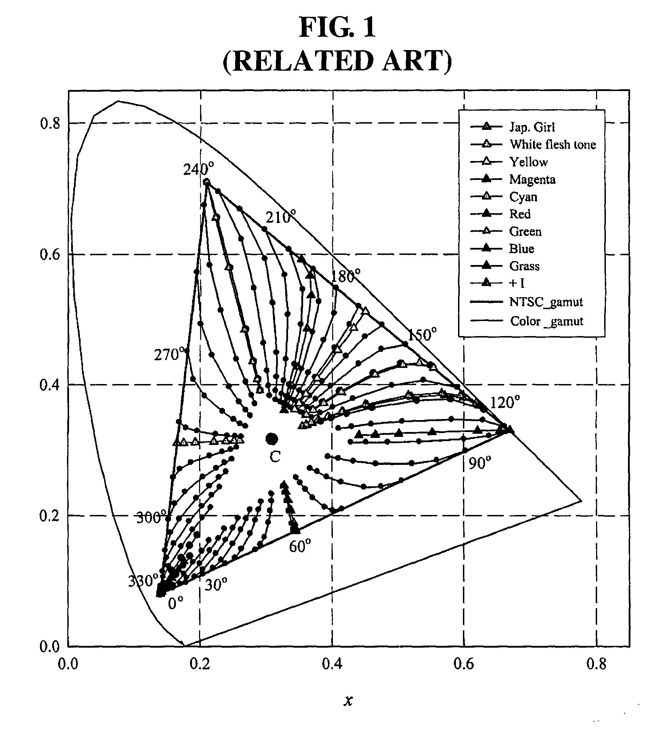

This will be explained in more detail with reference to FIG. 1 that illustrates the change of the color state according to the change of the color reproduction gamut in the Munsell color system. In FIG. 1, the trace of colors such as "jap.girl", "white flesh tone", "yellow", etc., having the same phase are indicated on the basis of their density and luminance as the color reproduction gamut is changed.

As illustrated in FIG. 1, the density and luminance of the colors such as "jap.girl", "white flesh tone", "yellow", etc., are changed as the color reproduction gamut is changed even if the colors have the same phase. That is, if the color reproduction gamut is changed, the colors appear different in the Munsell color system even if they have the same phase.

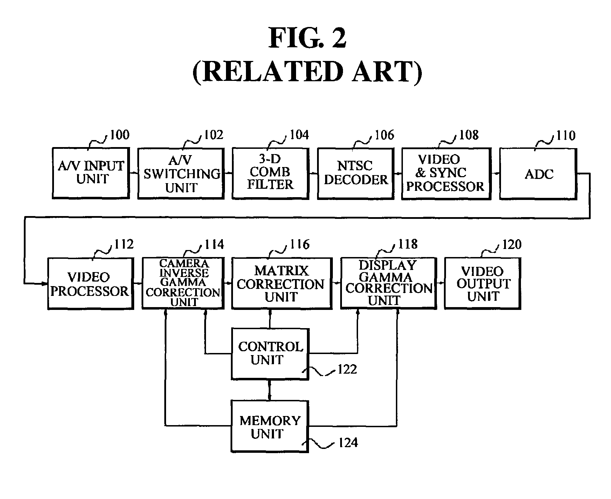

FIG. 2 is a block diagram illustrating the construction of a conventional display device.

In a conventional display device in FIG. 2, an A/V (audio/video) input unit 100 and an A/V switching unit 102 receive A/V signals from external signal sources and provide one of them to a 3-D (Three-Dimensional) comb filter 104. The 3-D comb filter 104 separates the A/V signal into luminance and color (Y/C) signals, and provides the separated luminance and color (Y/C) signals to an NTSC decoder 106. The NTSC decoder 106 converts the luminance and color (Y/C) signals into luminance and chrominance (YUV) signals, and provides the luminance and chrominance (YUV) signals to a video and sync processor 108.

The video and sync processor 108 performs a matrix conversion of the input signal according to the kind of the input signal, and bypasses the NTSC signal or the A/V signal to an ADC (Analog-to-Digital Converter) 110. The ADC 110 converts an output signal of the video and sync processor 108 into a digital signal, and provides the digital signal to a video processor 112. The video processor 112 converts the input YUV signals into RGB signals, and provides the RGB signals to a camera inverse gamma correction unit 114. The camera inverse gamma correction unit 114 receives gamma information applied to the signal source from a control unit 122, and performs a camera inverse gamma correction of the RGB signals using a gamma conversion table pre-stored in a memory unit 124. The RGB signals as inverse-gamma-corrected above have a linear characteristic.

A matrix correction unit 116 compensates for a chromaticity error occurring due to the coordinate difference between a phosphorescent substance of a transmitter side standard monitor and a phosphorescent substance of the display device, and compensates for a chromaticity error occurring due to the difference between the transmitter side reference white and the receiver side reference white.

A display gamma correction unit 118 receives information about the display device from the control unit 122, and performs a gamma correction suitable for the display device using the gamma conversion table pre-stored in the memory unit 124. The display-gamma-corrected video signal is then output through a video output unit 120.

As described above, the conventional display device has the drawbacks in that it performs the gamma correction only according to the characteristics of the image pickup device or the display device, but does not consider at all the problems that the reproduced colors become different from those of the signal source due to the difference between the color reproduction gamut of the display device and the color reproduction gamut of the signal source.

The present invention is directed to a color reproduction apparatus and method for a display device that substantially obviate one or more problems due to limitations and disadvantages of the related art.

It is an object of embodiments of the present invention to provide a color reproduction apparatus and method for a display device that can reproduce the same colors as those sent from a signal source even if a color reproduction gamut of the display device is different from that of the signal source.

According to one aspect of the invention there is provided a color reproduction apparatus for a display device, comprising a camera inverse gamma correction unit for receiving a video signal from a signal source and converting the video signal into a video signal having a linear characteristic by performing a camera inverse gamma correction of the input video signal, a matrix correction unit for performing a matrix correction of the video signal having the linear characteristic, a display gamma correction unit for performing a display gamma correction of the matrix-corrected video signal, and a Munsell hue correction unit for correcting a difference between colors sent from the signal source and colors reproduced through the display device according to a color reproduction gamut difference between the signal source and the display device with respect to the display-gamma-corrected video signal.

Preferably, the color reproduction apparatus further comprises a memory unit for storing an inverse gamma correction table for the camera inverse gamma correction and a gamma correction table for the display gamma correction, and a control unit for providing the inverse gamma correction table to the camera inverse gamma correction unit according to the input video signal, and providing the gamma correction table to the display gamma correction unit according to the display device.

Preferably, the Munsell hue correction unit is a conversion matrix that converts phases of the colors in order to correct the color reproduction gamut difference between the signal source and the display device.

In another aspect of the present invention, there is provided a color reproduction apparatus for a display device, comprising a camera inverse gamma correction unit for receiving a video signal from a signal source and performing a camera inverse gamma correction of the input video signal using an inverse gamma correction table for the camera inverse gamma correction, a matrix correction unit for performing a matrix correction of the inverse-gamma-corrected video signal, a display gamma correction unit for performing a display gamma correction of the matrix-corrected video signal using a gamma correction table for the display gamma correction, and a Munsell hue correction unit for correcting the display-gamma-corrected video signal so that the same colors as those sent from the signal source are reproduced through the display device in accordance with a color reproduction gamut difference between the signal source and the display device.

Preferably, the Munsell hue correction unit corrects the colors using a conversion matrix in order to correct the color reproduction gamut difference between the signal source and the display device.

In still another aspect of the present invention, there is provided a color reproduction method for a display device, comprising the steps of receiving a video signal from a signal source and converting the video signal into a video signal having a linear characteristic by performing a camera inverse gamma correction of the input video signal, performing a matrix correction of the video signal having the linear characteristic, performing a display gamma correction of the matrix-corrected video signal, and correcting a difference between colors sent from the signal source and colors reproduced through the display device according to a color reproduction gamut difference between the signal source and the display device with respect to the display-gamma-corrected video signal.

Preferably, the color reproduction method further comprises the steps of storing an inverse gamma correction table for the camera inverse gamma correction and a gamma correction table for the display gamma correction, wherein the camera inverse gamma correction of the input video signal is performed using the inverse gamma correction table according to the input video signal and the display gamma correction of the video signal is performed using the gamma correction table according to the display device.

Preferably, the step of correcting the difference between the colors sent from the signal source and the colors reproduced through the display device according to the color reproduction gamut difference between the signal source and the display device is performed through a conversion matrix for converting phases of the colors.

An embodiment of the invention will now be described, by way of example only, with reference to the accompanying drawings, in which:

FIG. 1 is a graph illustrating the change of the color state according to the change of the color reproduction gamut in the Munsell color system;

FIG. 2 is a block diagram illustrating the construction of a conventional display device; and

FIG. 3 is a block diagram illustrating the construction of a display device embodying the present invention.

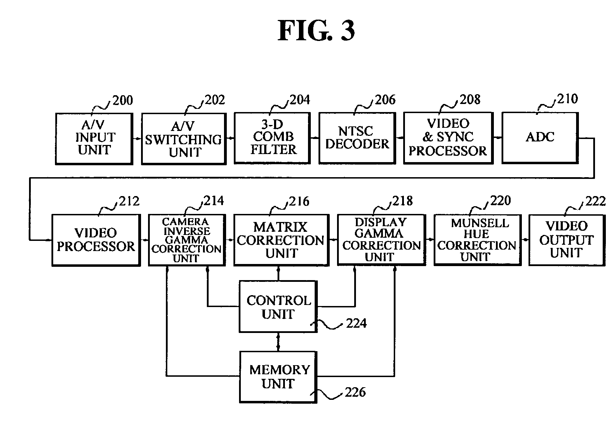

Referring to FIG. 3, an A/V (audio/video) input unit 200 and an A/V switching unit 202 receive A/V signals from external signal sources and provide one of them to a 3-D (Three-Dimensional) comb filter 204. The 3-D comb filter 204 separates the A/V signal into luminance and color (Y/C) signals, and provides the separated luminance and color (Y/C) signals to an NTSC decoder 206. The NTSC decoder 206 converts the luminance and color (Y/C) signals into luminance and chrominance (YUV) signals, and provides the luminance and chrominance (YUV) signals to a video and sync processor 208.

The video and sync processor 208 performs a matrix conversion of the input signal according to the kind of the input signal, and bypasses the NTSC signal or the A/V signal to an ADC (Analog-to-Digital Converter) 210. The ADC 210 converts an output signal of the video and sync processor 208 into a digital signal, and provides the digital signal to a video processor 212. The video processor 212 converts the input YUV signals into RGB signals, and provides the RGB signals to a camera inverse gamma correction unit 214. The camera inverse gamma correction unit 214 receives gamma information applied to the signal source from a control unit 224, and performs a camera inverse gamma correction of the RGB signals using a gamma conversion table pre-stored in a memory unit 226.

A matrix correction unit 216 compensates for a chromaticity error occurring due to the coordinate difference between a phosphorescent substance of a transmitter side standard monitor and a phosphorescent substance of the display device, and compensates for a chromaticity error occurring due to the difference between the transmitter side reference white and the receiver side reference white.

A display gamma correction unit 218 receives information about the display device from the control unit 224, and performs a gamma correction suitable for the display device using the gamma conversion table pre-stored in the memory unit 226.

The display-gamma-corrected video signal is then input to a Munsell hue correction unit 220.

The Munsell hue correction unit 220 corrects the video signal so that the same colors as those sent from the transmitter side can be reproduced based on the equal-hue and equal-chroma trace of the Munsell system.

Now, the feature of the Munsell hue correction unit 220 will be explained in more detail.

The Munsell hue correction unit 220 corrects the colors using a conversion matrix as expressed by Equation 1.

[Equation 1]

$$\begin{pmatrix} G \\ B \\ R \end{pmatrix} = \begin{pmatrix} M1 & M2 & M3 \\ M4 & M5 & M6 \\ M7 & M8 & M9 \end{pmatrix} \begin{pmatrix} Y \\ Cb \\ Cr \end{pmatrix}$$

By properly adjusting coefficients M1 to M9 for converting the phase of the colors in the conversion matrix that converts a color system of Y,Cb,Cr into a color system of G,B,R as expressed by Equation 1, the video signal is corrected so that the same colors as those sent from the transmitter side can be reproduced based on the equal-hue and equal-chroma trace of the Munsell system.

The coefficients M1 to M9 are determined as values by which the reproduced colors become equal to those from the signal source through experiments.

The video signal converted by the Munsell hue correction unit 220 is output through a video output unit 222.

As described above, embodiments of the present invention have the advantage that they can reproduce the same colors as those transmitted from the signal source even if the color reproduction gamut of the display device is different from that of the signal source.

The invention is not limited to NTSC systems, and is equally applicable to other standards such as (for example only) PAL and SECAM.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

**Claims**

**1.** A color reproduction apparatus for a display device, comprising:

a camera inverse gamma correction unit for receiving a video signal from a signal source and converting the video signal into a video signal having a linear characteristic by performing a camera inverse gamma correction of the input video signal;
a matrix correction unit for performing a matrix correction of the video signal having the linear characteristic;
a display gamma correction unit for performing a display gamma correction of the matrix-corrected video signal; and
a Munsell hue correction unit for correcting a difference between colors sent from the signal source and colors reproduced through the display device according to a color reproduction gamut difference between the signal source and the display device with respect to the display-gamma-corrected video signal.

**2.** A color reproduction apparatus as claimed in claim 1, further comprising:

a memory unit for storing an inverse gamma correction table for the camera inverse gamma correction and a gamma correction table for the display gamma correction; and
a control unit for providing the inverse gamma correction table to the camera inverse gamma correction unit according to the input video signal, and providing the gamma correction table to the display gamma correction unit according to the display device.

**3.** A color reproduction apparatus for a display device, comprising:

a camera inverse gamma correction unit for receiving a video signal from a signal source and performing a camera inverse gamma correction of the input video signal using an inverse gamma correction table for the camera inverse gamma correction;

a matrix correction unit for performing a matrix correction of the inverse-gamma-corrected video signal;

a display gamma correction unit for performing a display gamma correction of the matrix-corrected video signal using a gamma correction table for the display gamma correction; and

a Munsell hue correction unit for correcting the display-gamma-corrected video signal so that the same colors as those sent from the signal source are reproduced through the display device in accordance with a color reproduction gamut difference between the signal source and the display device.

**4.** A color reproduction apparatus as claimed in claim 3, wherein the Munsell hue correction unit corrects the colors using a conversion matrix in order to correct the color reproduction gamut difference between the signal source and the display device.

**5.** A color reproduction apparatus as claimed in any preceding claim, wherein the Munsell hue correction unit corrects the colors using a conversion matrix in order to correct the color reproduction gamut difference between the signal source and the display device.

**7.** A color reproduction method for a display device, comprising the steps of:

receiving a video signal from a signal source and converting the video signal into a video signal having a linear characteristic by performing a camera inverse gamma correction of the input video signal;

performing a matrix correction of the video signal having the linear characteristic;

performing a display gamma correction of the matrix-corrected video signal; and

correcting a difference between colors sent from the signal source and colors reproduced through the display device according to a color reproduction gamut difference between the signal source and the display device with respect to the display-gamma-corrected video signal.

**8.** A color reproduction method as claimed in claim 7, further comprising the steps of:

storing an inverse gamma correction table for the camera inverse gamma correction and a gamma correction table for the display gamma correction;

wherein the camera inverse gamma correction of the input video signal is performed using the inverse gamma correction table according to the input video signal, and the display gamma correction of the video signal is performed using the gamma correction table according to the display device.

**9.** The color reproduction method as claimed in claim 8, wherein the step of correcting the difference between the colors sent from the signal source and the colors reproduced through the display device according to the color reproduction gamut difference between the signal source and the display device is performed through a conversion matrix for converting phases of the colors.

**10.** The color reproduction method as claimed in claim 9, wherein the conversion matrix is expressed by a following equation,

$$\begin{pmatrix} G \\ B \\ R \end{pmatrix} = \begin{pmatrix} M1 & M2 & M3 \\ M4 & M5 & M6 \\ M7 & M8 & M9 \end{pmatrix} \begin{pmatrix} Y \\ Cb \\ Cr \end{pmatrix}$$

and by properly adjusting coefficients M1 to M9 that convert phases of the colors in the conversion matrix for converting a color system of Y,Cb,Cr into a color system of G,B,R, the video signal is corrected so that the same colors as those sent from a transmitter side can be reproduced based on an equal-hue and equal-chroma trace of a Munsell color system.

**11.** A color reproduction apparatus as claimed in claim 6, or a color reproduction method as claimed in claim 10, wherein the coefficients M1 to M9 are determined as values by which the reproduced colors become equal to those from the signal source.

## FIG. 1
## (RELATED ART)

# FIG. 2
# (RELATED ART)

| A/V INPUT UNIT 100 | A/V SWITCHING UNIT 102 | 3-D COMB FILTER 104 | NTSC DECODER 106 | VIDEO & SYNC PROCESSOR 108 | ADC 110 |
|---|---|---|---|---|---|

| VIDEO PROCESSOR 112 | CAMERA INVERSE GAMMA CORRECTION UNIT 114 | MATRIX CORRECTION UNIT 116 | DISPLAY GAMMA CORRECTION UNIT 118 | VIDEO OUTPUT UNIT 120 |
|---|---|---|---|---|

CONTROL UNIT 122

MEMORY UNIT 124

EP 1 553 787 A2

# FIG. 3

| 200 | 202 | 204 | 206 | 208 | 210 |

A/V INPUT UNIT → A/V SWITCHING UNIT → 3-D COMB FILTER → NTSC DECODER → VIDEO & SYNC PROCESSOR → ADC

| 212 | 214 | 216 | 218 | 220 | 222 |

VIDEO PROCESSOR → CAMERA INVERSE GAMMA CORRECTION UNIT → MATRIX CORRECTION UNIT → DISPLAY GAMMA CORRECTION UNIT → MUNSELL HUE CORRECTION UNIT → VIDEO OUTPUT UNIT

CONTROL UNIT 224

MEMORY UNIT 226

8